Europäisches Patentamt

European Patent Office

Office européen des brevets

(19)

(11) Veröffentlichungsnummer: **0 184 152 B1**

# EUROPÄISCHE PATENTSCHRIFT

(12)

(45) Veröffentlichungstag der Patentschrift:
23.01.91 Patentblatt 91/04

(51) Int. Cl.$^5$: **C08G 59/40, C08G 59/56, C09D 163/00, C09D 5/44**

(21) Anmeldenummer: 85115162.1

(22) Anmeldetag: 29.11.85

(54) Stickstoffbasische Gruppen tragendes Kunstharz, dessen Herstellung und Verwendung.

(30) Priorität: 04.12.84 DE 3444110

(43) Veröffentlichungstag der Anmeldung:
11.06.86 Patentblatt 86/24

(45) Bekanntmachung des Hinweises auf die
Patenterteilung:
23.01.91 Patentblatt 91/04

(84) Benannte Vertragsstaaten:
DE FR GB NL

(56) Entgegenhaltungen:
EP-A- 0 123 023
EP-A- 0 134 983
US-A- 4 391 933

(73) Patentinhaber: BASF Lacke + Farben
Aktiengesellschaft
Max-Winkelmann-Strasse 80
D-4400 Münster (DE)

(72) Erfinder: Loch, Werner, Dr.
In der Bleiche 2
D-6701 Erpolzheim (DE)
Erfinder: Schupp, Eberhard, Dr.
Tilsiter Weg 4
D-6830 Schwetzingen (DE)
Erfinder: Osterloh, Rolf, Dr.
Am Wehrhaus 16a
D-6718 Gruenstadt (DE)
Erfinder: Ahlers, Klaas, Dr.
Foehrenweg 21
D-4400 Muenster (DE)

(74) Vertreter: Mutzbauer, Helmut, Dr. et al
BASF Aktiengesellschaft Patentabteilung ZSP
- C 6 Carl-Bosch-Strasse 38
D-6700 Ludwigshafen/Rhein (DE)

## Beschreibung

Die vorliegende Erfindung betrifft stickstoffbasische Gruppen tragende, durch Protonierung mit Säure wasserverdünnbare Kunstharze, deren Herstellung und Verwendung als Überzugsmittel, insbesondere für die kathodische Elektrotauchlackierung.

In der deutschen Offenlegungsschrift DE-A-33 25 061 wird ein stickstoffbasische Gruppen tragendes, durch Protonierung mit Säure wasserverdünnbares Harz vorgeschlagen, das durch Reaktion von

(A) mindestens einem Epoxidharz mit einem mittleren Molekulargewicht $\overline{M}_n$ von 300 bis 6000 und im Mittel 1,5 bis 3,0 Epoxidgruppen pro Molekül mit

(B) einem Diketimin eines diprimären Amins und gegebenenfalls

(C) einem sekundären Amin, das gegebenenfalls zusätzlich eine tertiäre Aminogruppe enthält, einem Ketimin eines primären Monoamins und/oder einem Ketimin eines primär/tertiären Diamins und/oder einem Retimin eines Amidamins aus einem primären Diamin und Monocarbon-Säuren erhältlich ist.

Die Anzahl der eingesetzten Epoxidäquivalente des Epoxidharzes (A) ist dabei 50 bis 100% der Summe der eingesetzten Ketimin- und sekundären Amin-Äquivalente der Komponenten (B) und (C).

Aufgabe der vorliegenden Erfindung ist es, ein stickstoffbasische Gruppen tragendes, durch Protonierung mit Säure wasserverdünnbares Kunstharz aufzuzeigen, das verbessertes Fließverhalten sowie nach Protonierung und Verdünnung mit Wasser stabilere Dispersionen und bei Verwendung als Bindemittel für kathodisch abscheidbare Elektrotauchlacke Filme mit verbesserten Vetlaufseigenschaften ergibt.

Überraschenderweise wurde nun gefunden, daß stickstoffbasische Gruppen tragende Kunstharze mit deutlich verbesserten Eigenschaften erhalten werden, wenn Diketimine spezieller Diamine als Komponente (B) eingesetzt werden. Die so erhaltenen Kunstharze zeichnen sich durch günstigeres Fließverhalten, höhere Dispersionsstabilität und besseren Verlauf der kathodisch abgeschiedenen Lackfilme aus.

Gegenstand der vorliegenden Erfindung ist ein stickstoffbasische Gruppen tragendes, durch Reaktion von

(A) mindestens einem Epoxidharz mit einem mittleren Molekulargewicht $\overline{M}_n$ von 300 bis 6000 und im Mittel 1,5 bis 3,0 Epoxidgruppen pro Molekül mit

(B) einem Diketimin eines diprimären Amins

(C) einem sekundären Amin, das gegebenenfalls zusätzlich eine tertiäre Aminogruppe enthält einem Ketimin eines primären Monoamins und/oder einem Ketimin eines primär/tertiären Diamins und/oder einem Ketimin eines Amidamins aus einem primären Diamin und Monocarbonsäuren erhältliches, nach Protonierung mit Säure wasserverdünnbares Kunstharz, das dadurch gekennzeichnet ist, daß die Komponente (B) ein Diketimin ist aus

(B₁) einem Keton und

(B₂) mindestes einem verzweigten aliphatischen diprimären Diamin mit 5 bis 9 Kohlenstoffatomen, das gegebenenfalls bis zu 20 Gewichtsprozent durch andere aliphatische, araliphatische oder cycloaliphatische diprimäre Diamine ersetzt sein kann, wobei das Diamin (B₂) teilweise oder vollständig durch

(B₃) mindestens ein Diaminodiamid, das durch Kondensation von 2 mol Diamin (B₂) und 1 mol einer Dicarbonsäure mit einem Molekulargewicht von 118 bis 1000 erhältlich ist, ersetzt sein kann.

Gegenstand der vorliegenden Erfindung ist auch ein derartiges stickstoffbasische Gruppen tragendes, durch Protonierung mit Säure wasserverdünnbares Kunstharz, dessen Hydroxylgruppen zusätzlich zumindest teilweise mit teilgeblocktem Polyisocyanat zu Urethangruppen umgesetzt sind.

Gegenstand der vorliegenden Erfindung ist auch ein Verfahren zur Herstellung des erfindungsgemäßen Kunstharzes, wobei die Anzahl der eingesetzten Epoxid-Äquivalente des Epoxidharzes (A) 50 bis 100% der Summe der eingesetzten Ketimin- und sekundären Amin-Äquivalente der Komponenten (B) und (C) ist, und als Komponente (B) ein Diketimin verwendet wird, das erhalten wird, wenn bei der Ketiminisierung pro Mol primäre Aminogruppen der Mischung aus den Diaminkomponenten (B₂) und (B₃) 1 Mol Keton (B₁) zum Einsatz gelangt.

Gegenstand der vorliegenden Erfindung ist außerdem die Verwendung des erfindungsgemäßen, durch Protonierung mit Säure wasserverdünnbaren Kunstharzes in Form einer wäßrigen Dispersion, die gegebenenfalls zusätzlich Vernetzer, organische Lösemittel, Pigmente und/oder weitere Hilfsstoffe enthält, als Überzugsmittel, insbesondere für die kathodische Elektrotauchlackierung elektrisch leitfähiger Substrate.

Gegenstand der vorliegenden Erfindung sind auch Überzugsmittel, die als Bindemittel das erfindungsgemäß hergestellte stickstoffbasische Gruppen tragende Kumstharz und zusätzlich einen Wernetzer enthalten.

Desgleichen bezieht sich die vorliegenden Erfindung auf mit Lacküberzügen versehene Gegenstände, die durch Aufbringen der erfindungsgemäß hergestellten Kunstharze bzw. Überzugsmittel und Einbrennen erhalten worden sind.

Zu den Aufbau-Komponenten des erfindungsgemäßen Kunstharzes und dessen Herstellung ist im einzelnen folgendes zu sagen :

(A) Als Epoxidharze (A) können beliebige Materialien verwendet werden, sofern sie ein mittleres Molekulargewicht $\overline{M}_n$ von 300 bis 6000 und im Mittel 1,5 bis 3,0 Epoxidgruppen pro Molekül enthalten, vorzugsweise Verbindungen mit zwei Epoxidgruppen pro Molekül. Bevorzugt sind Epoxidharze mit mittleren Molekulargewichten $\overline{M}_n$ von 350 bis 5000, insbesondere 350 bis 2000. Besonders bevorzugte Epoxidharze sind zum Beispiel Glycidylether von im Mittel mindestens zwei phenolische Hydroxylgruppen pro Molekül enthaltenden Polyphenolen, die sich in üblicher Weise durch Veretherung mit einem Epihalohydrin in Gegenwart von Alkali herstellen lassen. Beispiele für geeignete Phenolverbindungen sind Bis-(4-hydroxyphenyl)-2,2-propan, 4,4'-Dihydroxybenzophenon, Bis-(4-hydroxyphenyl)-1,1-ethan, Bis-(4-hydroxyphenyl)-1,1-isobutan, Bis-(4-hydroxy-tert.-butyl-phenyl)-2,2-propan, Bis-(2-hydroxynaphthyl)methan, 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise Bis-(4-hydroxyphenyl)-2,2-propan reagieren läßt und dann die erhaltenen Produkte mit Epichlorhydrin unter Herstellung von Polyglycidylethern welter umsetzt.

Eine andere geeignete Klasse von Epoxidharzen sind Polyglycidylether von phenolischen Novolakharzen.

Ebenfalls geeignet sind Polyglycidylether von mehrwertigen Alkoholen, wie Ethylenglykol, Diethylenglykol, Triethylenglykol, 1,2-Propylenglykol, 1,3-Propandiol, 1,5-Pentandiol, 1,2,6-Hexantriol, Glycerin und Bis-(4-hydroxycyclohexyl)-2,2-propan.

Es können auch Polyglycidylester von Polycarbonsäuren verwendet werden.

Unter den bevorzugten Polyglycidylethern von Polyphenolen sind diejenigen mit Epoxidäquivalentgewichten im Bereich von 180 bis 1000 besonders bevorzugt.

Aromatische Polyepoxide mit einem höheren Epoxidäquivalentgewicht können aus solchen mit einem niedrigeren Epoxidäquivalentgewicht und Polyphenolen vor oder während der Umsetzung mit den Komponenten (B) und (C) hergestellt werden.

(B) Die Komponente (B) ist ein Diketimin aus

(B$_1$) einem beliebigen Keton und

(B$_2$) mindestens einem verzweigten aliphatischen primären Diamin mit 5 bis 9 Kohlenstoffatomen, das gegebenenfalls bis zu 20 Gewichtsprozent durch andere aliphatische, araliphatische oder cycloaliphatische diprimäre Diamine ersetzt sein kann, und oder

(B$_3$) mindestens einem Diaminodiamid, das durch Kondensation von 2 mol Diamin (B$_2$) und 1 mol einer Dicarbonsäure mit einem Molekulargewicht von 118 bis 1000 erhalten wird.

(B$_1$) Die Komponente (B$_1$) ist ein beliebiges Keton, wie beispielsweise Aceton, Methylethylketon, Methylpropylketon, Methylisopropylketon, Methylisobutylketon, Methylisoamylketon, Diethylketon, Dipropylketon, Cyclohexanon. Bevorzugte Ketone sind Aceton, Methylethylketon und Cyclohexanon, insbesondere Methylisobutylketon.

(B$_2$) Die Komponente (B$_2$) ist ein verzweigtes aliphatisches primäres Diamin mit 5 bis 9, vorzugsweise 5 bis 6 Kohlenstoffatomen. Geeignete Diamine sind z.B. Neopentandiamin, 2-Ethylpropandiamin, 2-Methylbutandiamin, 2-Ethylbutandiamin, 2-Methylpentandiamin, 2-Ethylpentandiamin, 3-Methylpentandiamin, 3-Ethylpentandiamin, 2,2,4-Trimethylhexandiamin, 2,4,4-Trimethylhexandiamin oder dgl. Bevorzugte erfindungsgemäß zu verwendende verzweigte aliphatische primäre Diamine (B$_2$) sind solche, deren primäre Aminogruppen durch einen verzweigten zweiwertigen aliphatischen Rest, der in der Hauptkette eine ungeradzahlige Anzahl von Kohlenstoffatomen aufweist, getrennt sind, wie z.B. Neopentandiamin, 2-Ethylpro pandiamin, 2-Methylpentandiamin, 2-Ethylpentandiamin, 3-Methylpentandiamin oder 3-Ethylpentandiamin. Besonders bevorzugt ist 2-Methylpentandiamin-1.5.

In einer besonders bevorzugten Ausführungsform der vorliegenden Erfindung ist das Diamin (B$_2$) ein Isomerengemisch aus mindestens zwei primären Diaminen mit 6 Kohlenstoffatomen, wie beispielsweise 2-Methylpentandiamin und 2-Ethylbutandiamin, das in Mengen bis 20 Gew.%, vor zugswelse 5 Gew.%, auch Hexamethylendiamin enthalten kann.

(B$_3$) Die Diamine (B$_2$) können für sich allein, vorzugsweise aber in Kombination mit Diaminodiamiden (B$_3$), wie sie durch Kondensation von 2 mol derselben Diamine (B$_2$) mit 1 mol beliebiger Dicarbonsäuren mit einem Molekulargewicht von 118 bis 1000, vorzugsweise 146 bis 600, erhalten werden. Geeignete Dicarbonsäuren sind beispielsweise Adipinsäure, Azelainsäure, Sebacinsäure oder dimere Fettsäure, wobei letztere bevorzugt ist.

Die Gemische aus den Diaminen (B$_2$) und den Diaminodiamiden (B$_3$) werden dabei vorzugsweise in situ erhalten, d.h. daß die Kondensationsreaktion zwischen der Dicarbonsäure und dem Diamin (B$_2$)

EP 0 184 152 B1

in Gegenwart eines Überschusses des letzteren durchgeführt wird.

In besonderen Fällen kann es auch vorteilhaft sein, die Diaminodiamide (B$_3$) für sich allein mit Keton (B$_1$) zum Diketimin (B) umzusetzen.

(C) Als gegebenenfalls mitzuverwendende sekundäre Amine können beliebige nichtaromatische Amine eingesetzt werden, z.B. Dialkylamine wie Dimethylamin, Diethylamin, Dipropylamin oder Dibutylamin Bevorzugt sind jedoch Alkanolamine, wie z. B. methylethanolamin, Ethylethanolamin, Diethanolamin, Methylisopropanolamin, Ethylisopropanolamin und Diisopropanolamin. Als sekundäre Amine (C) sind auch solche geeignet, die noch eine zusätzliche tertiäre Aminogruppe aufweisen, wie beispielweise N,N-Diethyl-N'-isobutyl-propylendiamin-1,3 und N,N-Bis(2-hydroxyethyl)-N'-isobutyl-propylendiamin-1,3.

Zuweilen kann es zweckmäßig sein, als Komponente (C) zusätzlich Ketimine von primären Monoaminen einzusetzen. Vor allem Ketimine langkettiger primärer Monoamine, wie z.B. Octylamin, Laurylamin, Stearylamin oder Amidaminen aus primären Diaminen und Monocarbonsäuren, wie Ethylhexansäure oder höherer Fettsäuren, können zur Plastifizierung der aus den erfindungsgemäßen Kunstharzen hergestellten Überzüge verwendet werden.

Werden als Komponente (C) zusätzlich Ketimine von Amidaminen aus primären Diaminen und Monocarbonsäuren eingesetzt, sind als Diamine wiederum die bereits genannten Verbindungen (B$_2$) bevorzugt. In diesen Fällen kann die Herstellung des Monofettsäureamins beispielsweise synchron mit der Bildung des Diaminodiamids (B$_3$) erfolgen, wenn die betreffende Monocarbonsäure vor der Kondensationsreaktion dem Gemisch aus Diamin (B$_2$) und Dicarbonsäure zugesetzt wird.

Schließlich können auch noch Monoketimine von primär/tertiären Diaminen als Komponente (C) eingesetzt werden. Beispiele hierfür sind die Ketimine des N,N-Diethyl-ethylendiamin und des N,N-Diethyl-propylendiamin-1,3. Diese Amine sind leichter zugänglich als oben genannte sekundär/tertiären Diamine, und über ihre Ketimine können zusätzliche basische Gruppen in die Harze eingebaut werden.

Für die erfindungsgemäßen Anwendungszwecke ist es wünschenswert, epoxidgruppenfreie Kunstharze herzustellen, d.h. die Anzahl der eingesetzten Epoxidäquivalente des Epoxidharzes (A) beträgt 50 bis 100% der Summe der eingesetzten Ketimin- und sekundären Amin-Äquivalente der Komponenten (B) und (C). Bei Produkten, die keine Komponente (C) enthalten, wird das Molekulargewicht des erfindungsgemäßen Künstharzes durch das Äquivalentverhältnis zwischen Epoxidgruppen und Ketimingruppen reguliert. Die Anzahl der eingesetzten Epoxidäquivalente des Epoxidharzes (A) beträgt dann besonders bevorzugt 50 bis 75% der eingesetzten Ketiminäquivalente der Komponente (B). Wird zusätzlich Komponente (C) eingesetzt, so wird das erreichbare Molekulargewicht zusätzlich durch die Menge an monofunktioneller Komponente (C) begrenzt. Dadurch ist es auch möglich, die Summe der eingesetzten Äquivalente (B) und (C) gleich den Äquivalenten an (A) zu wählen.

Die mittleren Molekulargewichte $\overline{M}_n$ der erfindungsgemäßen Kunstharze sollten 1000 bis 10.000 betragen, für viele Zwecke, z.B. für die Herstellung von kathophoretisch abscheidbaren wäßrigen Lacksystemen, sind mittlere Molekulargewichte $\overline{M}_n$ von 1500 bis 5000 anzustreben.

Die Umsetzung der Komponenten (A), (B) und gegebenenfalls (C) wird zweckmäßigerweise in Gegenwart von Lösemitteln, z. B. Kohlenwasserstoffen wie Toluol oder Xylol, Ketonen, wie Methylethylketon oder Methylisobutyl keton, Alkoholen wie Ethanol, Butanol, Estern, Ethern oder dergleichen bei Temperaturen von 50 bis 150°C, vorzugsweise 80 bis 130°C durchgeführt.

Das erfindungsgemäße Kunstharz enthält nach der Behandlung mit Wasser Hydroxylgruppen, sekundäre Aminogruppen und zusätzlich primäre und/oder tertiäre Aminogruppen. Es ist daher einer Vielzahl von Vernetzungsreaktionen zugänglich, was es nach Zumischung geeigneter Vernetzer zu einem wertvollen Lackbindemittel macht.

Geeignete Vernetzer für das erfindungsgemäße Bindemittel sind z.B. Aminoplastharze, wie Harnstoff-Formaldehyd-Harze, Melaminharze oder Benzoguanaminharze, Phenoplastharze, geblockte Isocyanatvernetzer, über Esteraminolyse und/oder Umesterung härtende Vernetzer mit im Mittel mindestens zwei aktivierten Estergruppen pro Molekül, z.B. β-Hydroxyalkylester-Vernetzer gemäß EP 00 40 867 und Carbalkoxymethylester-Vernetzer gemäß der DE-A 32 33 139, Harnstoffkondensationsprodukte, wie sie beispielsweise aus primären Di- und/oder Polyaminen, sekundären Monoaminen und Harnstoff, ggf. unter Mitverwendung eines Polyalkohols, wie beispielsweise Trimethylolpropan, erhalten werden, und β-Hydroxyl-alkylcarbamat-Vernetzer, wie sie beispielsweise durch Umsetzung polyprimärer Amine mit Ethylencarbonat erhalten werden. Die Mengen an einzusetzenden Vernetzern richten sich nach Art und Anzahl der miteinander reaktiven Gruppen im Kunstharz und Vernetzer und nach dem Grad der erwünschten Vernetzungsdichte. Im allgemeinen werden Kunstharz-Vernetzer-Verhältnisse von 1 : 9 bis 9 : 1, vorzugsweise 1 : 1 bis 9 : 1, insbesondere 1,5 : 1 bis 4 : 1, jeweils bezogen auf das Gewicht, eingesetzt.

Es ist nicht unbedingt nötig, separate Vernetzer zuzusetzen, da Vernetzerfunktionen auch in das erfin-

4

dungsgemäße Kunstharz eingebaut werden können, so daß es selbstvernetzend wird. Dies kann z.B. erfolgen, indem man nach der Umsetzung von (A), (B) und gegebenenfalls (C) das resultierende Harz mit einem teilgeblockten Polyisocyanat umsetzt, welches im Mittel noch ca. eine freie Isocyanatgruppe im Molekül enthält. Als Verkappungsmittel können dabei z.B. Alkohole, Phenole und Oxime verwendet werden. Eine weitere Möglichkeit, das erfindungsgemäße Kunstharz selbstvernetzend zu modifizieren, besteht in der Einführung von β-Hydroxyalkylcarbamatgruppen. Herzu wird das Keton aus dem erfindungsgemäßen Harz zunächst hydrolytisch abgespalten. Die entstehenden primären Aminogruppen werden dann beispielsweise mit Ethylencarbonat in β-Hydroxyethylcarbamate überführt.

Außer Vernetzern können weitere Stoffe wie Pigmente, Hilfsmittel, Lösemittel und Härtungskatalysatoren zugesetzt werden. Die so hergestellten Überzugsmittel können durch übliche Methoden wie Spritzen, Tauchen, Gießen und Rakeln auf Substrate wie Holz, Kunststoff oder Metall aufgebracht werden. Die Aushärtung der Überzüge erfolgt je nach Art des Vernetzers bei 120 bis 210°C während 5 bis 40 Minuten, wobei zur niedrigsten Einbrenntemperatur die längste Einbrennzeit gehört.

Die Aminzahlen der erfindungsgemäßen Kunstharze liegen im allgemeinen zwischen 50 und 300 mg KOH/g. Sie lassen sich daher, ggf. auch in Abmischung mit den oben genannten Vernetzern, durch vollständige oder teilweise Protonierung der Aminogruppen in wäßrige Dispersionen überführen, die sich vorteilhaft für die Elektrotauchlackierung elektrisch leitfähiger Substrate, wie z.B. Metallteilen, eignen. Dazu wird ein Neutralisationsmittel, wie z.B. Ameisensäure, Essigsäure, Milchsäure oder Phosphorsäure, eingerührt und mit Wasser auf die Verarbeitungskonzentration verdünnt.

Für die kathodische Elektrotauchlackierung wird im allgemeinen ein Feststoffgehalt des Elektrotauchbades von 5 bis 30 Gew.% eingestellt. Die Abscheidung erfolgt üblicherweise bei Temperaturen von 15 bis 40°C, während einer Zeit von 0,5 bis 5 Minuten und bei pH-Werten von 4,0 bis 8,5, vorzugsweise 5,0 bis 7,5, im allgemeinen bei Abscheidespannungen von 50 bis 500 Volt. Der zu beschichtende elektrisch leitende Körper wird dabei als Kathode geschaltet. Der abgeschiedene Film wird bei Temperaturen oberhalb von 120°C ca. 20 Minuten gehärtet.

Die folgenden Beispiele sollen die Erfindung näher erläutern, ohne sie zu beschränken.

Die in den Beispielen genannten Teile und Prozente sind Gewichtsteile und Gewichtsprozente.

## I. Herstellung der Diketimine der primären Diamine

### Vorprodukt 1 :

In einem mit Wasserauskreiser versehenen Gefäß werden 348 Teile 2-Methylpentandiamin und 960 Teile Methylisobutylketon unter Auskreisen von Wasser so lange zum Rückfluß erhitzt, bis 108 Teile Wasser abgetrennt sind. Das Produkt hat eine Aminzahl von 267 mg KOH/g und einen Lösemittelgehalt von 30%.

### Vorprodukt 2 :

In einem mit einem Wasserabscheider und Füllkörperkolonne versehenen Gefäß wird ein Isomerengemisch, bestehend aus 821 Teilen 2-Methylpentandiamin, 102 Teilen 2-Ethylbutandiamin und 5 Teilen Hexamethylendiamin, mit 1740 Teilen dimerisierter Fettsäure, 280 Teilen Leinölfettsäure und 222 Teilen Xylol 3 bis 4 Stunden bei 160 bis 180°C zur Reaktion gebracht. Während der Umsetzung werden ca. 120 Teile Wasser und ca. 220 Teile Xylol abdestilliert. Das so erhaltene Produkt hat eine Aminzahl von 179 mg KOH/g. Anschließend werden 2091 Teile Methylisobutylketon zugesetzt und unter Rückfluß 162 Teile Wasser ausgekreist.

Aus der resultierenden ca. 75%igen Diketiminlösung wird bei 100 bis 200 mbar überschüssiges Methylisobutylketon weitgehend destillativ entfernt. Die aufkonzentrierte Diketiminlösung hat eine Aminzahl von 133 mg KOH/g und enthält noch ca. 6% Lösemittel.

### Vorprodukt 3 :

Wie bei Vorprodukt 2 beschrieben, werden 316 Teile eines handelsüblichen Isomerengemisches aus 2.2.4- und 2.4.4-Trimethylhexandiamin und 290 Teile dimerisierte Fettsäure in 50 Teilen Xylol umgesetzt. Binnen 3 bis 4 Stunden werden ca. 18 Teile Wasser und 50 Teile Xylol abdestilliert. Das Produkt hat eine Aminzahl von 286 mg KOH/g. Anschließend werden 657 Teile Methylisobutylketon hinzugefügt und unter Rückfluß ca. 54 Teile Wasser ausgekreist. Das Produkt hat eine Aminzahl von 141 mg KOH/g und enthält 30% Lösemittel.

Vorprodukt 4 :

Das Vorprodukt 4 dient als Ausgangsmaterial für das Vergleichsbeispiel 2. Bei seiner Herstellung wird abweichend von dem erfindungsgemäßen Verfahren ein unverzweigtes Diamin als Komponente ($B_2$) eingesetzt :

Wie bei Vorprodukt 2 beschrieben, werden 821 Teile Hexamethylendiamin, 1740 Teile dimerisierte Fettsäure, 280 Teile Leinölfettsäure und 222 Teile Xylol 3 bis 4 Stunden bei 160 bis 180°C zur Reaktion gebracht. Während der Umsetzung werden ca. 120 Teile Wasser und ca. 220 Teile Xylol abdestilliert. Das Produkt hat eine Aminzahl von 179 mg KOH/g. Anschließend werden 2091 Teile Methylisobutylketon zugesetzt und unter Rückfluß 162 Teile Wasser ausgekreist. Aus der resultierenden ca. 75%igen Diketiminlösung wird bei 100 bis 200 mbar überschüssiges Methylisobutylketon weitgehend destillativ entfernt. Die aufkonzentrierte Diketiminlösung hat eine Aminzahl von 133 mg KOH/g und enthält noch ca. 6% Lösemittel.

II. Herstellung des erfindungsgemäßen stickstoffbasische Gruppen tragenden Kunstharzes

Beispiel 1

Aus 217 Teilen eines Diglycidylethers aus Bis-(4-hydroxyphenyl)-2,2-propan und Epichlorhydrin mit einem Epoxidäquivalentgewicht von 190 und 60 Teilen Toluol werden durch Auskreisen die enthaltenen Spuren von Wasser entfernt. Anschließend werden 285,7 Teile Vorprodukt 1 zugefügt und die Mischung 20 Stunden bei 120°C gehalten. Nach kurzer Zeit können keine Epoxidgruppen mehr nachgewiesen werden. Das Produkt hat nach hydrolytischer Abspaltung des Methylisobutylketons einen Gehalt an basischem Stickstoff von 3,3%. Davon entfallen auf primären Stickstoff 0,7%, auf sekundären Stickstoff 2,4% und auf tertiären Stickstoff 0,2%.

Vergleichsbeispiel 1

Dieses Beispiel entspricht Beispiel 1, doch wird an Stelle des Ketimins von 2-Methylpentandiamin das freie Amin selbst eingesetzt :

Zu 50 Teilen 2-Methylpentandiamin werden bei 80°C unter Kühlen 152 Teile des im Beispiel 1 verwendeten Diglycidylethers, in 50 Teilen Xylol gelöst, zugetropft und die Temperatur durch Kühlen bei 80°C gehalten. Das Produkt wird zunehmend viskoser und nach ca. 80% der beabsichtigten Menge des Zulaufs geliert der Ansatz.

Beispiel 2

207,9 Teile eines Diglycidylethers aus Bis-(4-hydroxyphenyl)-2,2-propan und Epichlorhydrin mit einem Äquivalentgewicht von 485 und 54,3 Teile eines analogen Diglycidylethers mit einem Äquivalentgewicht von 190 werden zusammen mit 60 Teilen Toluol zum Rückfluß erhitzt, um vorhandene Wasserspuren zu entfernen. Anschließend werden 231,8 Teile Vorprodukt 3 und 22,5 Teile Diethanolamin zugegeben und auf 120°C erhitzt. Nach 5 Stunden ist kein Epoxid mehr nachweisbar. Es wird mit 12 Teilen Butylglykol und 50 Teilen Isobutanol verdünnt. Das Produkt hat einen Festgehalt von 70%. Dies entspricht einem Festgehalt nach hydrolytischer Abspaltung des Methylisobutylketon von 62,5%.

Beispiel 3

258,7 Teile eines Diglycidylethers aus Bis-(4-hydroxyphenyl)-2,2-propan und Epichlorhydrin mit einem Äquivalentgewicht von 485 werden in 65 Teilen Toluol gelöst und die enthaltenen Wasserspuren durch Auskreisen entfernt. Es werden 154,6 Teile Vorprodukt 2 und 22,7 Teile Diethanolamin zugegeben und auf 120°C erhitzt. Nach 3 Stunden ist kein Epoxid mehr nachweisbar. Mit 12,7 Teilen Butylglykol und 95,9 Teilen Isobutanol wird dann auf einen theoretischen Festkörpergehalt von 70% verdünnt ; dies entspricht 65,1% nach hydrolytischer Abspaltung von Methylisobutylketon.

Vergleichsbeispiel 2

Dieses Beispiel entspricht Beispiel 3, doch wird anstelle des Vorprodukts 2 das aus dem unverzweigten Hexamethylendiamin erhaltene Vorprodukt 4 eingesetzt.

Nach mehrtägigem Stehen nimmt das Harz eine gelartige Konsistenz an und ist bei Raumtemperatur

EP 0 184 152 B1

nicht mehr fließfähig.

III. Einsatz des erfindungsgemäßen Kunstharzes in hitzehärtbaren Überzugsmitteln, insbesondere in kathodischen Elektrotauchlacken

Um bei erhöhter Temperatur vernetzen zu können, müssen dem stickstoffbasische Gruppen tragenden Kunstharz Vernetzer zugemischt werden, mit denen es bei Raumtemperatur stabile Mischungen bildet und beim Erhitzen vernetzt.

Vernetzer 1 :

Gemäß der DE-OS 27 01 002, Beispiel 1, wird ein geblockter Isocyanatvernetzer (Polyurethanvernetzer) hergestellt, indem 218 Teile 2-Ethylhexanol langsam zu 291 Teilen einer 80/ 20-Isomermischung von 2, 4-/ 2, 6-Toluylendiisocyanat unter Rühren und in einer Stickstoffatmosphäre gegeben werden, wobei die Reaktionstemperatur durch äußere Kühlung unter 38°C gehalten wird. Der Ansatz wird noch eine weitere halbe Stunde bei 38°C gehalten und dann auf 60°C erwärmt, wonach 75 Teile Trimethylolpropan und anschließend 0, 08 Teile Dibutylzinndilaurat als Katalysator zugegeben werden. Nach einer exothermen Reaktion zu Beginn wird der Ansatz 1,5 Stunden bei 121°C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Vernetzer 2 :

Gemäß der EP 00 40 867 Beispiel 2d) wird ein Polyestervernetzer hergestellt : 192 Teile Trimellitsäureanhydrid und 500 Teile Versaticsäureglycidylester, mit einem Epoxidäquivalentgewicht von 250, werden vermischt und unter Rühren auf 100°C erwärmt. Es tritt eine exotherme Reaktion auf, und die Temperatur steigt auf 190°C. Nach Abkühlen auf 140°C werden 2 Teile Benzyldimethylamin zugegeben. Die Mischung wird 3 Stunden bei 140°C gehalten. Es entsteht ein viskoses, klares Produkt.

Vernetzer 3 :

Ein als Vernetzer geeignetes Harnstoffkondensationsprodukt wird folgendermaßen hergestellt :
58 Teile Hexamethylendiamin, 60, 1 Teile 3, 3-Dimethyl-4, 4-diaminodicyclohexylmethan und 90 Teile Harnstoff werden innerhalb von 2 Stunden auf 160°C erhitzt. Dabei spaltet sich ab etwa 120°C Ammoniak ab. Die Reaktionsmischung wird zuerst flüssig und erstarrt dann zu einer weißen Kristallmasse. Die Temperatur wird erhöht, bis bei 180°C eine klare Schmelze entsteht. Bei dieser Temperatur werden innerhalb von 8 Stunden 193,5 Teile Dibutylamin zugegeben. Nach beendeter Zugabe wird so lange bei 180°C bis 190°C gehalten, bis der Rückfluß zum Erliegen kommt, wozu etwa 4 Stunden benötigt werden. Nach dem Abkühlen erstarrt das Harnstoffkondensationsprodukt zu einer farblosen, glasartigen Masse mit einem Erweichungspunkt von etwa 100° C.

Vernetzer 4 :

Ein weiteres als Vernetzer geeignetes Harnstoffkondensationsprodukt wird folgendermaßen hergestellt :
134 Teile Trimethylolpropan, 366 Teile Harnstoff und 1548 Teile Di-n-butylamin werden gemeinsam auf 140°C erhitzt, bis die anfänglich heftige Ammoniakentwicklung weitgehend abgeklungen ist (ca. 1 Stunde). Anschließend wird die Temperatur auf 160°C erhöht. Nach Erreichen dieser Temperatur werden binnen 1 Stunde 348 Teile 2-Methylpentandiamin zugetropft, während die Innentemperatur langsam auf 190 bis 200°C gesteigert wird. Nach 8-stündiger Umsetzung bei 200°C läßt man abkühlen auf 130°C. Es werden 2 Teile Dibutylzinndilaurat hinzugefügt und bei sukzessiver Steigerung der Innentemperatur auf 175°C 1110 Teile Di-n-butylamin abdestilliert. Der Rückstand wird mit 270 Teilen Methylisobutylketon auf einen Festkörpergehalt von ca. 80% verdünnt.

Beispiel 4

Zu 117 Teilen des Kunstharzes gemäß beispiel 2 werden 42,6 Teile des Vernetzers 1, 2 Teile Dibutylzinndilaurat und 2,3 Teile Essigsäure gegeben.

7

## Beispiel 5

Zu 147 Teilen des Kunstharzes gemäß Beispiel 3 werden 51, Teile des Vernetzers 4 gegeben und verrührt. Nach Zugabe von 3,15 Teilen Essigsäure wird das Produkt wasserverdünnbar.

## Beispiel 6

Zu 125 Teilen des Kunstharzes gemäß Beispiel 3 werden 42,6 Teile des Vernetzers 3 zugegeben und verrührt. Nach Zugabe von 2,5 Teilen Essigsäure wird das Produkt wasserverdünnbar.

## Beispiel 7

108 Teile des Kunstharzes gemäß beispiel 3, 30 Teile des Vernetzers 2, 3 Teile Bleioctoat (24% Pb) und 2,5 Teile Essigsäure werden bei Raumtemperatur vermischt.

## Vergleichsbeispiel 3

Dieses Beispiel entspricht Beispiel 6. Anstelle des Kunstharzes gemäß Beispiel 3 wurde dieselbe Menge des Kunstharzes auf Basis des nicht verzweigten Hexamethylendiamin gemäß Vergleichsbeispiel 2 eingesetzt.

## IV. Prüfung der Bindemittel

Zur Prüfung als kationische Elektrotauchlacke werden durch Zugabe von entionisiertem Wasser aus den mit Säure versetzten Bindemitteln 10%ige Dispersionen hergestellt. Unter Rühren werden zu jeweils 1000 Teilen der jeweiligen Bindemitteldispersion 90 Teile einer Pigmentpaste zugesetzt, welche folgendermaßen hergestellt wird :

## Pigmentpaste

Zunächst wird ein Pastenbindemittel hergestellt. Dazu werden 393 Teile eines Diglycidyletheis aus Bis-(4-hydroxyphenyl)-2,2-propan und Epichlorhydrin mit einem Äquivalentgewicht von 485 in 99 Teilen Xylol gelöst und die enthaltenen Wasserspuren durch Auskreisen entfernt. Es werden 393 Teile Vorprodukt 2 bei 120°C hinzugefügt. Nach 3 stündiger Umsetzung bei 120°C ist kein Epoxid mehr nachweisbar. Mit 298 Teilen Butylglykol wird dann auf einen theoretischen Festgehalt von 64,5% verdünnt. Dies entspricht 60% nach hydrolytischer Abspaltung von Methylisobutylketon. Abschließend wird das Pastenbindemittel durch Neutralisation mit 22,5 Teilen Essigsäure in eine wasserverdünnbare Form gebracht.

In einer Rührwerksmühle werden 317 Teile dieses Patentbindemittels, 63 Teile Butylglykol, 532 Teile Wasser, 389 Teile Kaolin, 78 Teile basisches Bleisilikat, 52 Teile Ruß, 13 Teile Rutil und 1500 Teile Glasperlen von einem Durchmesser von 2 mm 45 Minuten bei einer Drehzahl von 1000 Umdrehungen/Minute gerührt. Nach dem Abtrennen der Glasperlen wird eine Schwarzpaste mit einem Festgehalt von 50,6% erhalten.

Die Bäder werden 48 Stunden bei 30°C gerührt. An kathodisch geschalteten, zinkphosphatierten Prüftafeln aus Stahl werden Lackfilme innerhalb von 2 Minuten bei der angegebenen Spannung abgeschieden und 20 Minuten bei 180°C, bzw. 160°C eingebrannt. Anschließend wird die Beständigkeit gegen Aceton durch 50-maliges Hin- und Herreiben mit einem acetongetränkten Wattebausch, die Elastizität in Form der Schlagtiefung und die Beständigkeit gegen Salzsprühnebel geprüft. Die folgende Tabelle zeigt die Ergebnisse :

## Tabelle

| Lack gemäß | pH | Umgriff nach Ford (Spannung) | Acetonfestig- keit (Ein- brenntempe- ratur) | Schlagtiefung | 500 Stunden Salzsprühnebel- belastung nach ASTM (Unterwande- rung am Ritz) | Bad- stabilität |
|---|---|---|---|---|---|---|
| Beispiel 4 | 7,4 | 20 cm (300 V) | 1 (180°C) | 160 in x lb (= 1,84 m.Kg) | 0,5 mm | i.O. |
| Beispiel 5 | 6,7 | 21 cm (330 V) | 1 (160°C) | 160 " " | 0,5 mm | i.O. |
| Beispiel 6 | 7,2 | 22 cm (290 V) | 1 (160°C) | 160 " " | 0,5 mm | i.O. |
| Beispiel 7 | 7,0 | 21 cm (320 V) | 2 (180°C) | 160 " " | 1 mm | i.O. |
| Vergleichsbeispiel 3 | 7,2 | 22 cm (310 V) | 1 (160°C) | 160 " " | 0,5 mm | Randbildung; leichter Bodensatz |

Acetonfestigkeit: 1 = sehr gut

6 = ungenügend

Die aus Bädern gemäß Vergleichsbeispiel 3 abgeschiedenen und anschließend eingebrannten Filme zeigen eine ausgeprägtere Orangenschalenstruktur als entsprechende erfindungsgemäße Lacke nach Beispiel 6.

## Ansprüche

1. Stickstoffbasische Gruppen tragendes, durch Reaktion von

(A) mindestens einem Epoxidharz mit einem mittleren Molekulargewicht $\overline{M}_n$ von 300 bis 6000 und im Mittel 1,5 bis 3,0 Epoxidgruppen pro Molekül mit

(B) einem Diketimin eines diprimären Amins und gegebenenfalls

(C) einem sekundären Amin, das gegebenenfalls zusätzlich eine tertiäre Aminogruppe enthält, einem Ketimin eines primären Monoamins und/oder einem Ketimin eines primär/tertiären Diamins und/oder einem Ketimin eines Amidamins aus einem primären Diamin und Monocarbonsäuren, erhältliches, nach Protonierung mit Säure wasserverdünnbares Kunstharz, dadurch gekennzeichnet, daß die Komponente (B) ein Diketimin ist aus

(B$_1$) einem Keton und

(B$_2$) mindestens einem verzweigten aliphatischen diprimären Diamin mit 5 bis 9 Kohlenstoffatomen, das gegebenenfalls bis zu 20 Gew,-% durch andere aliphatische, araliphatische oder cycloaliphatische diprimäre Diamine ersetzt sein kann, wobei das Diamin (B$_2$) teilweise oder vollständig durch

(B$_3$) mindestens ein Diaminodiamid, das durch Kondensation von 2 mol Diamin (B$_2$) und 1 mol einer Dicarbonsäure mit einem Molekulargewicht von 118 bis 1000 erhältlich ist, ersetzt werden kann, wobei die Anzahl der eingesetzten Epoxid-Aquivalente des Epoxidharzes (A) 50 bis 100% der Summe der eingesetzten Ketimin- und sekundären Amin-Äquivalente der Komponente (B) und (C) ist.

2. Kunstharz nach Anspruch 1, dadurch gekennzeichnet, daß die primären Aminogruppen des 5 bis 9 Kohlenstoffatome aufweisenden Diamins (B$_2$) durch einen verzweigten zweiwertigen aliphatischen Rest, der in der Hauptkette eine ungeradzahlige Anzahl von Kohlenstoffatomen aufweist, getrennt sind.

3. Kunstharz nach einem der Ansprüche 1 oder 2, dadurch gekennzeichnet, daß das 5 bis 9 Kohlenstoffatome aufweisende Diamin (B$_2$) 2-Methylpentandiamin-1, 5 ist.

4. Kunstharz nach Anspruch 1, dadurch gekennzeichnet, daß das 5 bis 9 Kohlenstoffatome aufweisende Diamin (B$_2$) ein Isomerengemisch aus mindestens zwei diprimären Diaminen mit sechs Kohlenstoffatomen, das in Mengen bis 20 Gew.% auch Hexamethylendiamin enthalten kann, ist.

5. Kunstharz nach einem der Ansprüche 1 bis 4, dadurch gekennzeichnet, daß die Hydroxylgruppen des Reaktionsprodukts aus (A), (B) und gegebenenfalls (C) zumindest teilweise mit teilblockiertem Polyisocyanat zu Urethangruppen umgesetzt sind.

6. Verfahren zur Herstellung eines Kunstharzes gemäß einem der Ansprüche 1 bis 5, dadurch gekennzeichnet, daß man

(A) mindestens ein Epoxidharz mit einem mittleren Molekulargewicht $\overline{M}_n$ von 300 bis 6000 und im Mittel 1,5 bis 3,0 Epoxidgruppen pro Molekül mit

(B) einem Diketimin eines diprimären Amins aus

(B$_1$) einem Keton und

(B$_2$) mindestens einem verzweigten aliphatischen diprimären Diamin mit 5 bis 9 Kohlenstoffatomen, das gegebenenfalls bis zu 20 Gew.-% durch andere aliphatische, araliphatische oder cycloaliphatische diprimäre Diamine ersetzt sein kann, wobei das Diamin (B$_2$) teilweise oder vollständig durch

(B$_3$) mindestens ein Diaminodiamid, das durch Kondensation von 2 mol Diamin (B$_2$) und 1 mol einer Dicarbonsäure mit einem Molekulargewicht von 118 bis 1000 erhältlich ist, ersetzt sein kann, und gegebenenfalls

(C) einem sekundären Amin, das gegebenenfalls zusätzlich eine tertiäre Aminogruppe enthält, einem Ketimin eines primären Monoamins und/oder einem Ketimin eines primär/tertiären Diamins und/oder einem Ketimin eines Amidamins aus einem primären Diamin und Monocarbonsäuren, wobei die Anzahl der eingesetzten Epoxid-Äquivalente des Epoxidharzes (A) 50 bis 100% der Summe der eingesetzten Ketimim- und sekundären Amin-Äquivalente der Komponente (B) und (C) ist, in Gegenwart von Lösemitteln bei Temperaturen von 50 bis 150°C umsetzt.

7. Verfahren zur Herstellung des Kunstharzes nach einem der Ansprüche 1 bis 5, dadurch gekennzeichnet, daß als Epoxidharz (A) ein Glycidylether eines im Mittel mindestens zwei phenolische Hydroxylgruppen pro Molekül enthaltenden Polyphenols, der ein mittleres Molekulargewicht $\overline{M}_n$ zwischen 350 und 5000 aufweist, verwendet wird.

8. Verfahren zur Herstellung des Kunstharzes nach einem der Ansprüche 1 bis 5, dadurch gekennzeichnet, daß als Keton (B$_1$) Methylisobutylketon verwendet wird.

9. Verwendung des durch Protonierung mit Säure wasserverdünnbaren Kunstharzes, gemäß einem der Ansprüche 1 bis 5 form einer wäßrigen Dispersion, die gegebenenfalls zusätzlich Vernetzer, organische Lösemittel, Pigmente und/oder weitere Hilfsstoffe enthält, als Überzugsmittel.

10. Verwendung nach Anspruch 9 für die kathodische Elektrotauchlackierung elektrisch leitfähiger Substrate.

11. Überzugsmittel, dadurch gekennzeichnet, daß es als Bindemittel ein stickstoffbasische Gruppen tragendes, durch Protonierung mit Säure wasserverdünnbares Kunstharz nach einem der Ansprüche 1 bis 5, erhältlich nach einem Verfahren gemäß einem der Ansprüche 6 bis 8, und zusätzlich einen Vernetzer enthält.

12. Überzugsmittel nach Anspruch 11, dadurch gekennzeichnet, daß der Vernetzer ein Aminoplast- und/oder Phenoplastharz ist.

13. Überzugsmittel nach Anspruch 11, dadurch gekennzeichnet, daß der Vernetzer ein geblocktes mehrwertiges Isocyanat ist.

14. Überzugsmittel nach Anspruch 11, dadurch gekennzeichnet, daß der Vernetzer eine zur Esteraminolyse und/oder Umesterung befähigte Verbindung mit im Mittel mindestens zwei aktivierten Estergruppen pro Molekül ist.

15. Überzugsmittel nach Anspruch 11, dadurch gekennzeichnet, daß der Vernetzer ein Harnstoffkondensationsprodukt ist, das durch Umsetzung eines primären Di- und/oder Polyamins mit Harnstoff und einem sekuadären Monoamin, gegebenenfalls unter Mitverwendung eines Polyalkohols bei erhöhter Temperatur unter Abtrennung des entstehenden Ammoniaks erhalten worden ist.

16. Verfahren zur Herstellung von Überzügen durch kathodische Elektrotauchlackierung aus einem Elektrotauchbad, dadurch gekennzeichnet, daß das Elektrotauchbad ein mit Säure protoniertes gemäß einem der Ansprüche 6 bis 8 hergestelltes Kunstharz nach einem der Ansprüche 1 bis 5 oder ein Überzugsmittel gemäß einem der Ansprüche 11 bis 15 sowie gegebenenfalls zusätzlich Pigmente, organische Lösungsmittel und/oder weitere Hilfsstoffe enthält.

17. Mit einem Lacküberzug versehener Gegenstand, dadurch gekennzeichnet, daß er mit einem Überzug versehen ist, der durch Aufbringen eines nach einem der Ansprüche 9 oder 10 verwendeten Kunstharzes oder eines Überzugsmittels nach einem der Ansprüche 11 bis 15 und Einbrennen erhalten worden ist.

## Claims

1. A synthetic resin which carries basic nitrogen groups, which is obtainable by reacting
(A) one or more epoxy resins having a mean molecular weight $\overline{M}_n$ of from 300 to 6000 and on average from 1.5 to 3.0 epoxy groups per molecule with
(B) a diketimine of a diprimary amine and, if required,
(C) with a secondary amine, which may additionally contain a tertiary amino group, with a ketimine of a primary monoamine or with a ketimine of a primary/tertiary diamine or a ketimine of an amide amine of a primary diamine and a monocarboxylic acid, and which is water-dilutable after protonation with an acid, wherein component (B) is a diketimine obtained from
(B$_1$) a ketone and
(B$_2$) one or more branched aliphatic diprimary diamines of 5 to 9 carbon atoms, which, if required, may be replaced to an extent of up to 20% by weight by other aliphatic, araliphatic or cycloaliphatic diprimary diamines, and some or all of the diamine (B$_2$) may be replaced by
(B$_3$) one or more diaminodiamides which are obtainable by condensation of 2 moles of a diamine (B$_2$) and 1 mole of a dicarboxylic acid having a molecular weight of from 118 to 1000, the number of epoxy equivalents of epoxy resin (A) which are employed being from 50 to 100% of the sum total of the ketimine and secondary amine equivalents of components (B) and (C) employed.

2. A synthetic resin as claimed in claim 1, wherein the primary amino groups of the diamine (B$_2$) of 5 to 9 carbon atoms are separated by a branched divalent aliphatic radical which has an odd number of carbon atoms in the main chain.

3. A synthetic resin as claimed in either of claims 1 and 2, wherein the diamine (B$_2$) of 5 to 9 carbon atoms is 2-methylpentane-1,5-diamine.

4. A synthetic resin as claimed in claim 1, wherein the diamine (B$_2$) of 5 to 9 carbon atoms is an isomer mixture of two or more diprimary diamines of 6 carbon atoms, which mixture may furthermore contain as much as 20% by weight of hexamethylenediamine.

5. A synthetic resin as claimed in any of claims 1 to 4, wherein some or all of the hydroxyl groups of the reaction product of (A), (B) and, where relevant, (C) are converted to urethane groups with partially blocked polyisocyanate.

6. A process for the preparation of a synthetic resin as claimed in any of claims 1 to 5, wherein
(A) one or more epoxy resins having a mean molecular weight $\overline{M}_n$ of from 300 to 6000 and on average from 1.5 to 3.0 epoxy groups per molecule are reacted at from 50 to 150°C in the presence of solvents with

(B) a diketimine of a diprima amine from

(B₁) a ketone and

(B₂) one or more branched aliphatic diprimary diamines of 5 to 9 carbon atoms, which, if required, may be replaced to an extent of up to 20% by weight by other aliphatic, araliphatic or cycloaliphatic diprimary diamines, and some or all of the diamine (B₂) may be replaced by

(B₃) one or more diaminodiamides which are obtainable by condensation of 2 moles of a diamine (B₂) and 1 mole of a dicarboxylic acid having a molecular weight of from 118 to 1000, and, if required,

(C) with a secondary amine, which may additionally contain a tertiary amino group, with a ketimine of a primary monoamine or with a ketimine of a primary/tertiary diamine or a ketimine of an amide amine of a primary diamine and a monocarboxylic acid, the number of epoxy equivalents of epoxy resin (A) which are employed being from 50 to 100% of the sum total of the ketimine and secondary amine equivalents of components (B) and (C) employed.

7. A process for the preparation of a synthetic resin as claimed in any of claims 1 to 5, wherein a glycidyl ether of a polyphenol which has on average two or more phenolic hydroxyl groups per molecule and a mean molecular weight $\overline{M}_n$ of from 350 to 5000 is used as epoxy resin (A).

8. A process for the preparation of a synthetic resin as claimed in any of claims 1 to 5, wherein methyl isobutyl ketone is used as ketone (B₁).

9. The use of a synthetic resin as claimed in any of claims 1 to 5, rendered water-dilutable by protonation with an acid and in the form of an aqueous dispersion, which may additionally contain crosslinking agents, organic solvents, pigments and/or further assistants, as a coating material.

10. The use as claimed in claim 9 for the cathodic electrocoating of electrically conductive substrates.

11. A coating material which contains a synthetic resin as claimed in any of claims 1 to 5, which carries basic nitrogen groups, is water-dilutable on protonation with an acid and is obtainable by a process as claimed in any of claims 6 to 8, as the binder and additionally contains a crosslinking agent.

12. A coating material as claimed in claim 11, wherein the crosslinking agent is an aminoplast resin and/or a phenoplast resin.

13. A coating material as claimed in claim 11, wherein the crosslinking agent is a blocked polyvalent isocyanate.

14. A coating material as claimed in claim 11, wherein the crosslinking agent is a compound which is capable of undergoing ester aminolysis and/or transesterification and has on average two or more activated ester groups per molecule.

15. A coating material as claimed in claim 11, wherein the crosslinking agent is a urea condensate which is obtained by reacting a primary di- or polyamine with urea and a secondary monoamine in the presence or absence of a polyalcohol at elevated temperatures, with removal of the ammonia formed.

16. A process for the production of a coating by cathodic electrocoating from an electrocoating bath, wherein the electrocoating bath contains a synthetic resin as claimed in any of claims 1 to 5 produced as claimed in any of claims 6 to 8 and protonated with an acid, or a coating material as claimed in any of claims 11 to 15, and may furthermore contain pigments, organic solvents and/or further assistants.

17. An article provided with a surface coating, which coating is obtained by applying a synthetic resin used as claimed in either of claims 9 and 10 or a coating material as claimed in any of claims 11 to 15, and carrying out baking.

## Revendications

1. Résine synthétique portant des groupes renfermant de l'azote basique, diluable à l'eau après protonation par un acide et pouvant être obtenue par réaction

(A) d'au moins une résine époxy ayant un poids moléculaire moyen de 300 à 6000 et renfermant en moyenne 1,5 à 3,0 groupements époxy par molécule, avec

(B) une dicétimine d'une amine diprimaire et éventuellement

(C) une amine secondaire qui, le cas échéant, contient en plus un groupement amino tertiaire, une cétimine d'une mono-amine primaire et/ou une cétimine d'une diamine primaire/tertiaire et/ou une cétimine d'une amidamine dérivée d'une diamine primaire et d'acides monocarboxyliques, caractérisée en ce que le composant (B) est une dicétimine dérivée

(B₁) d'une cétone et

(B₂) d'au moins une diamine diprimaire aliphatique ramifiée à 5-9 atomes de carbone, qui peut être

EP 0 184 152 B1

éventuellement remplacée, dans une proportion allant jusqu'à 20% en poids, par d'autres diamines diprimaires aliphatiques, araliphatiques ou cycloaliphatiques, la diamine ($B_2$) pouvant être remplacée en partie ou en totalité par

($B_3$) au moins un diaminodiamide qui peut être obtenu par condensation de 2 moles de diamine ($B_2$) et de 1 mole d'un acide dicarboxylique ayant un poids moléculaire de 118 à 1000, le nombre des équivalents époxy de la résine époxy (A) mis en réaction étant compris entre 50 et 100% de la somme des équivalents cétimine et amine secondaire des composants (B) et (C) mis en réaction.

2. Résine synthétique selon la revendication 1, caractérisée en ce que les groupements amine primaire de la diamine renfermant 5 à 9 atomes de carbone ($B_2$) sont séparés par un reste aliphatique bivalent ramifié qui présente un nombre impair d'atomes de carbone dans la chaîne principale.

3. Résine synthétique selon la revendication 1 ou 2, caractérisée en ce que la diamine renfermant 5 à 9 atomes de carbone ($B_2$) est la 2-méthylpentanediamine-1, 5.

4. Résine synthétique selon la revendication 1, caractérisée en ce que la diamine renfermant 5 à 9 atomes de carbone ($B_2$) est un mélange d'isomères d'au moins deux diamines diprimaires à 6 atomes de carbone, mélange qui peut aussi contenir de l'hexaméthylènediamine dans des proportions allant jusqu'à 20% en poids.

5. Résine synthétique selon l'une quelconque des revendications 1 à 4, caractérisée en ce que les groupements hydroxy du produit de réaction de (A), (B) et éventuellement (C) sont transformés au moins en partie en groupements uréthane par réaction avec un polyisocyanate partiellement bloqué.

6. Procédé de préparation d'une résine synthétique selon l'une quelconque des revendications 1 à 5, caractérisé en ce qu'on fait réagir, en présence de solvants à des températures de 50 à 150°C,

(A) au moins une résine époxy ayant un poids moléculaire moyen $\overline{M}_n$ de 300 à 6000 et renfermant en moyenne 1,5 à 3,0 groupements époxy par molécule, avec

(B) une dicétimine d'une amine diprimaire dérivée

($B_1$) d'une cétone et

($B_2$) d'au moins une diamine diprimaire aliphatique ramifiée à 5-9 atomes de carbone, qui peut être éventuellement remplacée, dans une proportion allant jusqu'à 20% en poids, par d'autres diamines diprimaires aliphatiques, araliphatiques ou cycloaliphatiques, la diamine ($B_2$) pouvant être remplacée en partie ou en totalité par

($B_3$) au moins un diaminodiamide qui peut être obtenu par condensation de 2 moles de diamine ($B_2$) et de 1 mole d'un acide dicarboxylique ayant un poids moléculaire de 118 à 1000, et éventuellement

(C) une amine secondaire qui, le cas échéant, contient en plus un groupement amino tertiaire, une cétimine d'une mono-amine primaire et/ou une cétimine d'une diamine primaire/tertiaire et/ou une cétimine d'une amidamine dérivée d'une diamine primaire et d'acides monocarboxyliques, le nombre des équivalents époxy de la résine époxy (A) mis en réaction étant compris entre 50 et 100% de la somme des équivalents cétimine et amine secondaire des composants (B) et (C) mis en réaction.

7. Procédé de préparation de la résine synthétique selon l'une quelconque des revendications 1 à 5, caractérisé en ce qu'on utilise, comme résine époxy (A), un glycidyléther d'un polyphénol qui contient en moyenne au moins deux groupements hydroxy phénoliques par molécule et qui présente un poids moléculaire moyen $\overline{M}_n$ compris entre 350 et 5000.

8. Procédé de préparation de la résine synthétique selon l'une quelconque des revendications 1 à 5, caractérisé en ce qu'on utilise, comme cétone ($B_3$), de la méthylisobutylcétone.

9. Utilisation de la résine synthétique diluable à l'eau après protonation par un acide selon l'une quelconque des revendications 1 à 5, sous forme d'une dispersion aqueuse qui, le cas échéant, contient en plus des réticulants, des solvants organiques, des pigments et/ou d'autres adjuvants, comme produit de revêtement.

10. Utilisation selon la revendication 9 pour le trempage électrophorétique cathodique de substrats éleotroconducteurs.

11. Produit de revêtement, caractérisé en ce qu'il contient, en tant que liant, une résine synthétique portant des groupes renfermant de l'azote basique et diluable à l'eau après protanation par un acide selon l'une quelconque des revendications 1 à 5, pouvant être obtenue par un procédé selon l'une quelconque des revendications 6 à 8, et en ce qu'il contient en plus un réticulant.

12. Produit de revêtement selon la revendication 11, caractérisé en ce que le réticulant est une résine aminoplaste et/ou phénoplaste.

13. Produit de revêtement selon la revendication 11, caractérisé en ce que le réticulant est un isocyanate polyvalent bloqué.

14. Produit de revêtement selon la revendication 11, caractérisé en ce que le réticulant est un composé susceptible d'esteraminolyse et/ou de transestérification, renfermant en moyenne au moins deux groupe-

13

ments ester activés par molécule.

15. Produit de revêtement selon la revendication 11, caractérisé en ce que le réticulant est un produit de condensation d'urée qui a été obtenu par réaction d'une di- et/ou polyamine primaire avec de l'urée et une monoamine secondaire, éventuellement avec utilisation simultanée d'un polyalcool, à température élevée et avec séparation de l'ammoniac formé.

16. Procédé pour la formation de couches de revêtement par trempage électrophorétique cathodique dans un bain de trempage électrophorétique, caractérisé en ce que le bain de trempage électrophorétique contient une résine synthétique selon l'une quelconque des revendications 1 à 5, préparée selon l'une quelconque des revendications 6 à 8 et protonée par un acide ou un produit de revêtement selon l'une quelconque des revendications 11 à 15, et en plus, le cas échéant, des pigments, des solvants organiques et/ou d'autres adjuvants.

17. Objet garni d'un revêtement de laque, caractérisé en ce qu'il est garni d'un revêtement qui a été obtenu par application d'une résine synthétique utilisée selon la revendication 9 ou 10 ou d'un produit de revêtement selon l'une quelconque des revendications 11 à 15 et par cuisson.